# EUROPEAN PATENT APPLICATION

(11) **EP 4 447 481 A1**
(43) Date of publication of application: **16.10.2024**
(21) Application number: 22906544.6
(22) Date of filing: 13.12.2022
(51) Int. Cl.: H04Q 11/00, G02B 6/42

(54) **CO-PACKAGED ASSEMBLY AND NETWORK DEVICE**

(30) Priority: 15.12.2021 CN 202111535209
(71) Applicant: ZTE Corporation, Shenzhen, Guangdong 518057 (CN)
(72) Inventor: TANG, Ningfeng, Shenzhen, Guangdong 518057 (CN)
(74) Representative: Canzler & Bergmeier Patentanwälte Partnerschaft mbB
(86) International application number: PCT/CN2022/138596
(87) International publication number: WO 2023/109799

(57) **Abstract**

A co-packaged assembly, comprising a substrate, a chip, and a plurality of CPOs. The chip is arranged in a central region on a first side of the substrate, and the CPOs are arranged in a peripheral region of the substrate; the orthographic projections of the CPOs on the substrate fully surround the orthographic projection of the chip on the substrate, and the orthographic projections of two adjacent CPOs on the substrate are spliced with each other. The co-packaged assembly can increase an optical fiber fan-out space and improve space use efficiency, and can avoid the problem of insertion loss caused by vertical coupling; meanwhile, efficient expansion of the area of the CPOs can further be achieved.

## Description

### CROSS REFERENCE TO RELATED APPLICATIONS

The present disclosure claims the priority to Chinese Patent Application No. CN202111535209.4, entitled "CO-PACKAGED ASSEMBLY AND NETWORK DEVICE" and filed with the CNIPA on December 15, 2021, the contents of which are incorporated herein by reference in their entirety.

### TECHNICAL FIELD

Embodiments of the present disclosure relate to, but are not limited to, the technical field of communication equipment, and in particular to a co-packaged assembly and a network device.

### BACKGROUND

With a continuous increase in SERializer/DESerializer (Serdes) rate, a conflict between signal integrity and power consumption of the Serdes is incurred, and the conflict is particularly serious for a DC switch chip and a router chip which are provided with a large number of Serdes. In view of the above, the use of a CPO (Co-Packaged Optics) has been proposed in the industry to resolve the conflict. The CPO is an optical module with ultra-high density, large capacity, and high speed, and can be co-packaged with a main processing chip (e.g., a switch chip). The power consumption is reduced by reducing a distance between the switch chip and the CPO. The CPO and the main chip are collectively referred to as a co-packaged assembly (CPA).

A back end of the CPO is a fan-out region used for connection with optical fibers. A size of the fan-out region determines the number of the connected optical fibers. Therefore, how to increase fan-out space becomes an urgent problem to be solved. In the related technology, a vertical coupling method is adopted to increase CPO density, so as to solve the problem of the limited fan-out space for the optical fibers. However, an insertion loss of the vertical coupling method is much larger than that of a horizontal coupling method.

### SUMMARY

The present disclosure provides a co-packaged assembly and a network device.

In a first aspect, an embodiment of the present disclosure provides a co-packaged assembly, including a substrate, a chip, and a plurality of CPOs, the chip is disposed in a central region of the substrate on a first side of the substrate, and each of the CPOs is disposed in a peripheral region of the substrate; and orthographic projections of all the CPOs on the substrate completely surround an orthographic projection of the chip on the substrate, and the orthographic projections of two adjacent CPOs on the substrate are spliced with each other.

In the other aspect, an embodiment of the present disclosure further provides a network device, including the above co-packaged assembly.

### BRIEF DESCRIPTION OF DRAWINGS

FIG. 1 is a plan view of a CPA in the related technology;
FIG. 2 is a schematic diagram of a CPA architecture with eight CPOs configured for one chip according to an embodiment of the present disclosure;
FIG. 3 is a schematic diagram of a CPA architecture with eight CPOs configured for one chip according to another embodiment of the present disclosure;
FIG. 4 is a schematic diagram of a CPA architecture including two models and two specifications of CPOs in a solution of configuring eight CPOs for one chip according to an embodiment of the present disclosure;
FIG. 5 is a schematic diagram of a CPA architecture including two specifications of CPOs without distinguishing models in a solution of configuring eight CPOs for one chip according to an embodiment of the present disclosure;
FIG. 6 is a schematic diagram of a CPA architecture combining a solution of configuring eight CPOs for one chip and a solution of configuring four CPOs for one chip according to an embodiment of the present disclosure;
FIG. 7 is a schematic diagram of a CPA architecture with four CPOs configured for one chip according to an embodiment of the present disclosure;
FIG. 8 is a schematic diagram of a CPA architecture including two specifications of CPOs without distinguishing models in a solution of configuring four CPOs for one chip according to an embodiment of the present disclosure; and
FIG. 9 is a sectional view of a CPA according to an embodiment of the present disclosure.

### DETAIL DESCRIPTION OF EMBODIMENTS

Exemplary embodiments will be described more fully below with reference to the drawings, but the exemplary embodiments may be embodied in different forms, and should not be interpreted as being limited to the embodiments described herein. Rather, the embodiments are provided to make the present disclosure thorough and complete, and are intended to enable those of ordinary skill in the art to fully understand the scope of the present disclosure.

The term "and/or" used herein includes any and all combinations of one or more associated listed items.

The terms used herein are merely used to describe specific embodiments, and are not intended to limit the present disclosure. As used herein, "a" and "the" which indicate a singular form are intended to include a plural form, unless expressly stated in the context. It should be further understood that the term(s) "include" and/or "be made of" used herein indicate(s) the presence of the described features, integers, operations, elements and/or components, but do not exclude the presence or addition of one or more other features, integers, operations, elements, components and/or combinations thereof.

The embodiments described herein can be described with reference to plans and/or cross-sectional views with the aid of idealized schematic diagrams of the present disclosure. Accordingly, the exemplary drawings may be modified according to manufacturing techniques and/or tolerances. Therefore, the embodiments are not limited to those illustrated by the drawings, but include modifications to configuration formed based on a manufacturing process. Thus, regions shown in the drawings are illustrative, and shapes of the regions shown in the drawings illustrate specific shapes of regions of elements, but are not intended to make limitations.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

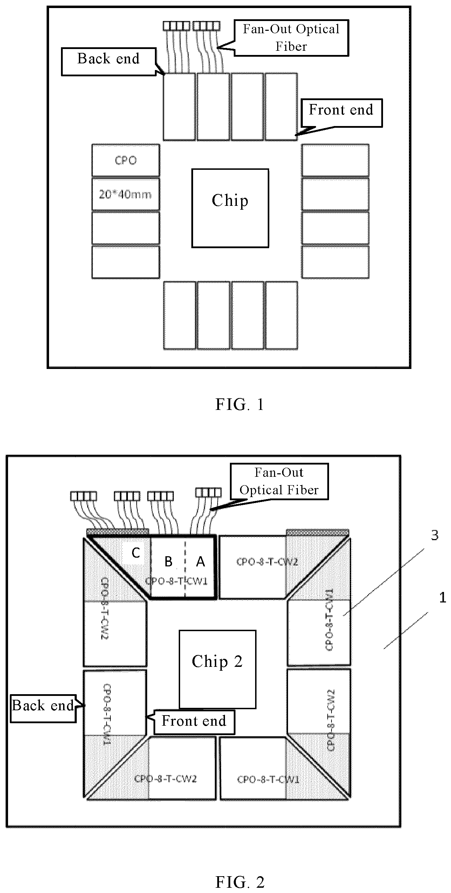

In the related technology, the CPO in the CPA generally adopts a standard rectangular structure. As shown in FIG. 1, the CPO is a 20mm*40mm rectangular module, and sixteen rectangular CPOs are configured for one chip, thus forming a 1+16 CPA architecture. However, the 1+16 CPA architecture has the following disadvantages.

1. A fan-out length of the optical fibers at the back end of the CPO is limited by a width of a front end of the CPO. If the width of the front end of the CPO is increased, the distance between the CPO and the chip is directly increased, resulting in an increase in power consumption. If a length of the CPO is increased, lengths of wires inside the CPO are increased, resulting in deterioration of signal performance. Thus, extensibility of the spatial sizes of the CPO is poor.

2. CPOs of two specifications, i.e., DR4 (4-wavelengths 4-fibers) and FR4 (4-wavelengths 1-fiber), adopt a same dimension design. At present, FR4 (4-wavelengths 1-fiber) is desired to have additional space for wave combining and wave splitting of optical paths. Therefore, it is not reasonable that both the CPO of the specification of DR4 and the CPO of the specification of FR4 adopt the same size. In addition, for making the CPO of the specification of DR4 and the CPO of the specification of FR4 into the same size, for FR4, the silicon-based integration can be used to compress the FR4 to the CPO having the existing size, which is high in technical difficulty and difficult to be implemented. At present, expansion can be performed outside the CPO, which needs an external combiner/splitter, resulting in inconvenience in use and increase in cost.

3. There is unused space between the CPOs arranged in different directions, resulting in low utilization of CPA space.

In order to solve the above problems, an embodiment of the present disclosure provides a co-packaged assembly. As shown in FIG. 2, FIG. 7, and FIG. 9, the co-packaged assembly includes a substrate 1, a chip 2, and a plurality of CPOs 3, the chip 2 is disposed in a central region of the substrate 1 on a first side 11, and each CPO 3 is disposed in a peripheral region of the substrate 1. Orthographic projections of all the CPOs on the substrate 1 completely surround an orthographic projection of the chip 1 on the substrate 1, and the orthographic projections of two adjacent CPOs 3 on the substrate 1 are spliced with each other.

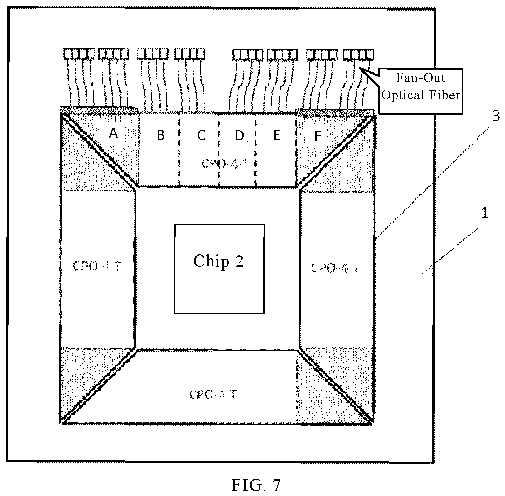

As shown in FIG. 1, FIG. 2, and FIG. 7, the shaded parts in FIG. 2 and FIG. 7 represent an additional area of the CPOs provided in the embodiments of the present disclosure relative to the CPO in the related technology shown in FIG. 1. Outer edges of the CPOs corresponding to the shaded parts represent an additional fan-out length of the optical fibers of the CPOs provided in the embodiments of the present disclosure relative to the CPO in the related technology shown in FIG. 1.

The co-packaged assembly provided in the embodiments of the present disclosure includes the substrate 1, the chip 2, and the plurality of CPOs 3, the chip 2 is disposed in the central region of the substrate 1 on the first side 11 of the substrate 1, and each CPO 3 is disposed in the peripheral region of the substrate 1. The orthographic projections of all the CPOs 3 on the substrate 1 completely surround the orthographic projection of the chip 2 on the substrate 1, and the orthographic projections of two adjacent CPOs 3 on the substrate 1 are spliced with each other. The co-packaged assembly provided in the embodiments of the present disclosure can increase the fan-out space of the optical fibers, increase space utilization efficiency, and avoid the problem of the insertion loss caused by the vertical coupling method, and can also realize efficient expansion of an area of the CPO.

In some embodiments, each CPO 3 is in a shape of trapezoid, and two legs of the trapezoidal orthographic projections of two adjacent CPOs 3 on the substrate 1 are spliced with each other. In the embodiments of the present disclosure, all the CPOs 3 and the chip 2 together form a shape of the character " 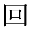 ", with the chip 2 being surrounded. At each of four corners of the shape of the character " 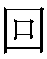 ", the two CPOs 3 arranged in different directions are spliced through the legs of the trapezoids, so that the chip 2 is completely surrounded. It should be understood by those of ordinary skill in the art that the case where the orthographic projections of all the CPOs 3 on the substrate 1 completely surround the orthographic projection of the chip 2 on the substrate 1 includes: any two CPOs 3 are spliced with each other, with a certain gap provided therebetween.

In some embodiments, as shown in FIG. 2, the CPOs 3 include first CPOs in a shape of right trapezoid.

In some embodiments, as shown in FIG. 7, the CPOs 3 include second CPOs in a shape of isosceles trapezoid.

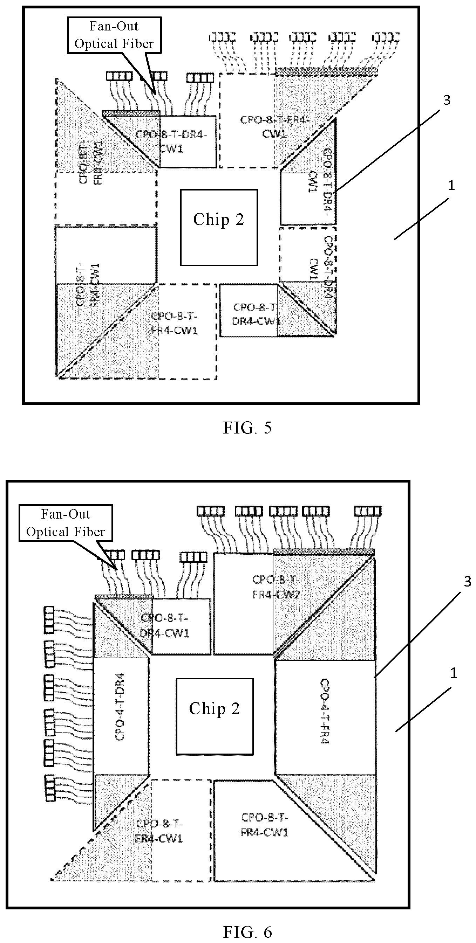

In some embodiments, as shown in FIG. 6, the CPOs 3 not only include first CPOs but also include second CPOs, that is, the co-packaged assembly is provided with the CPOs in the shape of right trapezoid and the CPOs in the shape of isosceles trapezoid.

The above embodiments will be described in detail below.

The CPOs are designed into the shape of trapezoid in the embodiments of the present disclosure. For the solution in which the CPOs merely include the first CPOs, one co-packaged assembly includes eight first CPOs, thus forming a 1+8 CPA architecture. The shapes of the first CPOs (in the shape of right trapezoid) located at a same edge of the chip 2 are asymmetric, that is, for a same Serdes arrangement sequence of the chip 2, two adjacent first CPOs are different in Serdes arrangement sequence and position. Therefore, the two adjacent first CPOs cannot be interchangeable. In view of the above problem, the first CPOs may be designed into two models and placed on a same side of the substrate 1; or, the first CPOs may be designed into merely one model and placed on both sides of the substrate 1.

FIG. 2 is a schematic diagram of a CPA architecture having eight CPOs configured for one chip according to an embodiment of the present disclosure. As shown in FIG. 2, the CPOs 3 include the first CPOs (CPO-8-T), the first CPOs include model-I first CPOs (CPO-8-T-CWI) and model-II first CPOs (CPO-8-T-CW2), a pair of a model-I first CPO (CPO-8-T-CWI) and a model-II first CPO (CPO-8-T-CW2) is arranged outside each edge of the chip 2, and the model-I first CPO (CPO-8-T-CWI) and the model-II first CPO (CPO-8-T-CW2) are arranged in an axisymmetric manner. In this embodiment, model identifiers of the first CPOs end with CWI and CW2 for distinction.

Both the model-I first CPOs (CPO-8-T-CWI) and the model-II first CPOs (CPO-8-T-CW2) are in the shape of right trapezoid. The co-packaged assembly includes eight first CPOs including four model-I first CPOs (CPO-8-T-CWI) and four model-II first CPOs (CPO-8-T-CW2); and one model-I first CPO (CPO-8-T-CWI) and one model-II first CPO (CPO-8-T-CW2) form one pair, and are arranged in an axisymmetric manner. A pair of first CPOs (CPO-8-T) is disposed at each edge of the chip 2.

Taking the leftmost top first CPO in FIG. 2 as an example, it can be seen that the first CPO includes three regions A, B, C, and the region C is an additional region relative to the 1+16 CPA architecture. For the CPO, fan-out positions of the optical fibers are typically at the back end of the CPO, i.e., an outer edge of the region C (i.e., the position of the filled long strip in the region C in FIG. 2). It can be seen that the addition of the region C can increase the fan-out space of the optical fibers.

In some embodiments, each first CPO (CPO-8-T) is disposed on a same side of the substrate 1. In the embodiments of the present disclosure, as shown in FIG. 2, the four model-I first CPOs (CPO-8-T-CWI) and the four model-II first CPOs (CPO-8-T-CW2) are all disposed on the first side 11 of the substrate 1, that is, the four model-I first CPOs (CPO-8-T-CWI) and the four model-II first CPOs (CPO-8-T-CW2) are all both disposed on the same side of the substrate 1 as the chip 2.

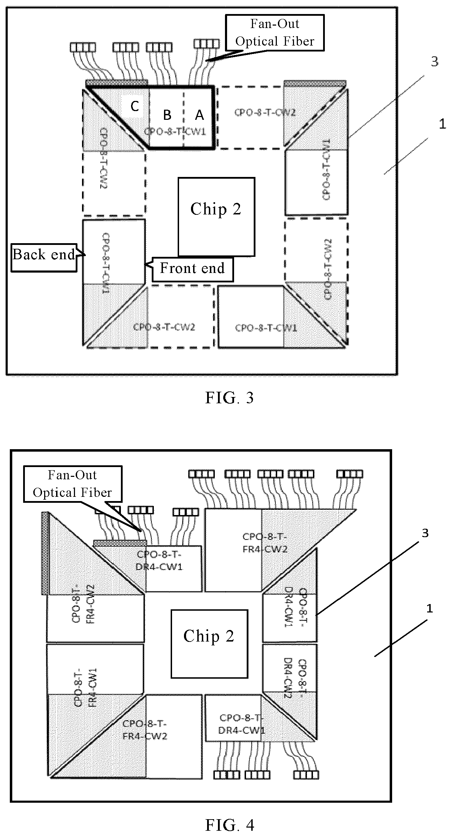

In some embodiments, the model-I first CPOs (CPO-8-T-CWI) are disposed on the first side 11 or a second side 12 of the substrate 1, and the second side 12 is an opposite side relative to the first side 11. The model-II first CPOs (CPO-8-T-CW2) and the model-I first CPOs (CPO-8-T-CWI) are disposed on different sides of the substrate 1. That is, if the model-I first CPOs (CPO-8-T-CWI) are disposed on the first side 11 of the substrate 1, the model-II first CPOs (CPO-8-T-CW2) are disposed on the second side 12 of the substrate 1; and if the model-I first CPOs (CPO-8-T-CWI) are disposed on the first side 12 of the substrate 1, the model-II first CPOs (CPO-8-T-CW2) are disposed on the second side 11 of the substrate 1. In the embodiments of the present disclosure, as shown in FIG. 3, the four model-I first CPOs (CPO-8-T-CWI) are disposed on the first side 11 of the substrate 1, and the four model-II first CPOs (CPO-8-T-CW2) are disposed on the second side 12 of the substrate 1 (the model-II first CPOs are marked by the dashed lines in FIG. 2).

Since DR4 (4-wavelengths 4-fibers) and FR4 (4-wavelengths 1-fiber) have different requirements on the size of the CPO, the CPO of a relatively large size is used in the design of FR4, which can reduce cost and solve the existing problem of the high design difficulty of FR4. Correspondingly, in some embodiments, as shown in FIG. 4, the model-I first CPOs (CPO-8-T-CWI) include model-I specification-I first CPOs (CPO-8-T-DR4-CWI) and model-I specification-II first CPOs (CPO-8-T-FR4-CWI),the model-II first CPOs (CPO-8-T-CW2) include model-II specification-I first CPOs (CPO-8-T-DR4-CW2) and model-II specification-II first CPOs (CPO-8-T-FR4-CW2), and an area of the model-I specification-I first CPO (CPO-8-T-DR4-CW2) and an area of the model-II specification-I first CPO (CPO-8-T-DR4-CW2) are smaller than an area of the model-I specification-II first CPO (CPO-8-T-FR4-CWI) and an area of the model-II specification-II first CPO (CPO-8-T-FR4-CW2), respectively. That is, regardless of the models, the areas of the specification-I (DR4) CPOs are smaller than those of the specification-II (FR4) CPOs. All the model-I specification-I first CPOs (CPO-8-T-DR4-CWI), the model-I specification-II first CPOs (CPO-8-T-FR4-CWI), the model-II specification-I first CPOs (CPO-8-T-DR4-CW2), and the model-II specification-II first CPOs (CPO-8-T-FR4-CW2) are disposed on the first side 11 of the substrate 1. That is, in these embodiments, the eight CPOs are disposed on the same side of the substrate 1, i.e., on the side where the chip 2 is located. As can be seen from FIG. 4, regardless of the models and the specification, each of the model-I specification-I first CPOs, the model-I specification-II first CPOs, the model-II specification-I first CPOs, and the model-II specification-II first CPOs can increase the fan-out length and the fan-out space.

In some embodiments, the CPOs 3 include first CPOs including model-I first CPOs (CPO-8-T-CWI), a part of the model-I first CPOs (CPO-8-T-CWI) are disposed on the first side 11 of the substrate 1, the other part of the model-I first CPOs (CPO-8-T-CWI) are disposed on a second side 12 of the substrate 1, and the second side 12 is an opposite side relative to the first side 11. In these embodiments, the first CPOs have merely one model (i.e., model-I CW1). Therefore, the first CPOs are separately disposed on the two sides of the substrate 1. The distribution of the first CPOs on the co-packaged assembly in these embodiments is similar to that shown in FIG. 3, except that the model-II first CPOs (CPO-8-T-CW2) in FIG. 3 are replaced with the model-I first CPOs (CPO-8-T-CWI).

In some embodiments, as shown in FIG. 5, the model-I first CPOs (CPO-8-T-CWI) include model-I specification-I first CPOs (CPO-8-T-DR4-CWI) and model-I specification-II first CPOs (CPO-8-T-FR4-CWI), and an area of the model-I specification-I first CPO (CPO-8-T-DR4-CWI) is smaller than that of the model-I specification-II first CPO (CPO-8-T-FR4-CWI). A part of the model-I specification-I first CPOs (CPO-8-T-DR4-CWI) and the model-I specification-II first CPOs (CPO-8-T-FR4-CWI) are disposed on the first side 11 of the substrate 1, and the other part of the model-I specification-I first CPOs (CPO-8-T-DR4-CWI) and the model-I specification-II first CPOs (CPO-8-T-FR4-CWI) are disposed on the second side 12 of the substrate 1. That is, in these embodiments, four of the eight CPOs are disposed on the first side 11 of the substrate 1, and the other four are disposed on the second side 12 of the substrate 1. As can be seen from FIG. 5, both the specification-I first CPOs and the specification-II first CPOs can increase the fan-out length and the fan-out space.

In the embodiments illustrated by FIG. 5, merely one model (i.e., CW1) is designed for all specifications of the first CPOs. When the co-packaged assembly is formed, two first CPOs at a same edge of the chip 2 are separately placed on the different sides of the substrate 1. In this way, the existing two specifications of the CPOs, i.e., the DR4 CPOs and the FR4 CPOs, may be implemented with merely two models of the first CPOs. For distinction, the two models are named CPO-8-T-DR4-CW1 and CPO-8-T-FR4-CW1 respectively. In these embodiments, the two specifications of the one model of the CPOs, i.e., CPO-8-T-DR4-CW1 and CPO-8-T-FR4-CW1, are implemented by being bonded to the two sides of the substrate 1.

In some embodiments, the CPOs 3 include first CPOs and second CPOs, that is, the co-packaged assembly is provided with the CPOs in the shape of right trapezoid and the CPOs in the shape of isosceles trapezoid. As shown in FIG. 6, the CPOs 3 not only include the first CPOs (CPO-8-T) but also include the second CPOs (CPO-4-T), the second CPOs (CPO-4-T) include specification-I second CPOs (CPO-4-T-DR4) and specification-II second CPOs (CPO-4-T-FR4), an area of the specification-I second CPO (CPO-4-T-DR4) is smaller than that of the specification-II second CPO (CPO-4-T-FR4), and the specification-I second CPOs (CPO-4-T-DR4) and the specification-II second CPOs (CPO-4-T-FR4) are disposed on the first side 11 of the substrate 1. It should be noted that the first CPOs (CPO-8-T) may be divided into different models or not, in which case the first CPOs (CPO-8-T) are distributed on the first side 11 and the second side 12 of the substrate 1. In the embodiments illustrated by FIG. 6, the first CPOs (CPO-8-T) are divided into different models, that is, the first CPOs (CPO-8-T) include model-I first CPOs (CPO-8-T-CWI) and model-II first CPOs (CPO-8-T-CW2). One of the model-I first CPOs (CPO-8-T-CWI) (i.e., the model-I first CPO marked by the dashed line at the left lower corner of FIG. 6) is disposed on the second side 12 of the substrate 1. It should be noted that the model-I first CPO (CPO-8-T-CWI) may also be replaced with the model-II first CPO (CPO-8-T-CW2) disposed on the first side 11 of the substrate 1.

In the embodiments illustrated by FIG. 6, the co-packaged assembly is formed from a plurality of kinds of CPOs, and includes first CPOs and second CPOs, thus forming a mixed CPA architecture of 1+4 CPA architecture and 1+8 CPA architecture. The number of the first CPOs is n, and a value range of n is from 1 to 8. The number of the second CPOs is m, and a value range of m is from 1 to 4. In these embodiments, the used CPOs are in the following five models and specifications: CPO-8-T-DR4-CW1, CPO-8-T-FR4-CW2, CPO-4-T-FR4, CPO-8-T-FR4-CW1, CPO-4-T-DR4.

In some embodiments, as shown in FIG. 7, the CPOs 3 include second CPOs (CPO-4-T), and does not include first CPOs (CPO-8-T), and the co-packaged assembly includes four second CPOs, thus forming a 1+4 CPA architecture. The second CPOs (CPO-4-T) are in the shape of isosceles trapezoid, and are disposed on the first side 11 of the substrate 1.

Taking the second CPO on the upper portion of FIG. 7 as an example, it can be seen that the second CPO includes six regions, namely A, B, C, D, E, F, and the regions A and F are the additional regions relative to the 1+16 CPA architecture, and the positions of the outer edges of the regions A and F (i.e. the positions of the filled long strips in the regions A and F in FIG. 7) can be used for fan-out of the optical fibers, thereby increasing the fan-out space of the optical fibers.

It should be noted that, for the 1+4 CPA architecture, since the second CPOs are in the shape of isosceles trapezoid and the shape of the second CPOs is symmetrical, the problem that the CPOs are not interchangeable does not exist. Therefore, merely one CPO model is needed for the 1+4 CPA architecture.

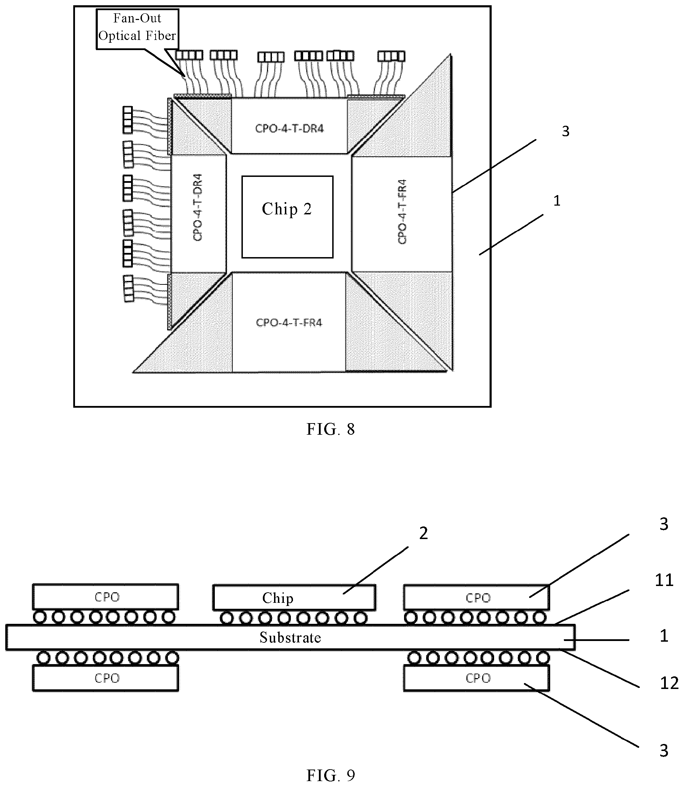

In some embodiments, as shown in FIG. 8, the second CPOs (CPO-4-T) include specification-I second CPOs (CPO-4-T-DR4) and specification-I second CPOs (CPO-4-T-FR4), and an area of the specification-I second CPO (CPO-4-T-DR4) is smaller than that of the specification-II second CPO (CPO-4-T-FR4). Both the specification-I second CPOs (CPO-4-T-DR4) and the specification-II second CPOs (CPO-4-T-FR4) are disposed on the same side (i.e., the first side 11) of the substrate 1.

In some embodiments, as shown in FIG. 9, the CPOs 3 may be disposed on the first side 11 and the second side 12 of the substrate 1. Taking a case where the CPOs 3 merely include the first CPOs (CPO-8-T) and the first CPOs (CPO-8-T) include the model-I first CPOs (CPO-8-T-CWI) and the model-II first CPOs (CPO-8-T-CW2) as an example, eight first CPOs (including the two models of the first CPOs) may be separately disposed on the first side 11 and the second side 12 of the substrate 1. Thus, sixteen CPOs 3 may be configured for one chip 2, and the number of the CPOs is doubled, so that the number of the connected optical fibers is increased.

Taking the 1+8 CPA architecture as an example, the advantages of the embodiments of the present disclosure compared with the related technology (the 1+16 CPA architecture) are as follows:
1. Under the condition of the same area, the CPO provided in the embodiments of the present disclosures has a decreased size and an increased fan-out length.
   Assuming that that an area of one first CPO in the shape of right trapezoid provided in the embodiments of the present disclosure is the same as an area of two rectangular CPOs provided in the related technology, that is, the area S' of the right trapezoid=2*the area S of the rectangular CPO=1600mm². Under the condition that the width of the front end of the first CPO is 40mm and kept unchanged, an extension length (i.e. a height of the right trapezoid) of the first CPO can be reduced from 40mm to 29.5mm, that is, the extension length is reduced by about 26.3% (7/40=26.3%). A total area surrounded by all the CPOs in the co-packaged assembly is reduced from 16mm*16mm=256cm² to 13.9mm*13.9mm=193.2cm², and is totally reduced by 24.5% (256-193.2)/256=24.5%). Meanwhile, the fan-out length of the optical fibers is increased by 73% (29.5/40=73%), that is, more fan-out surfaces are obtained in the same CPO space, which greatly improves the space utilization of the co-packaged assembly.
2. Under the condition of the same size of the front end and the same extension length of the CPO (that is, the regions B and A are kept unchanged, and the region C is added), the area of the CPO provided in the embodiments of the present disclosure is increased by 50%, and the fan-out length of the optical fibers is increased by 100%.
   In general, a 3.2T CPO needs sixty four data path fibers. In addition, the CPO is provided with external light source fibers, typically four or eight external light source fibers. Considering the optical fibers that need a light source, more than seventy data optical fibers are needed in actual applications. If the horizontal coupling method is adopted, the length of the back end of the CPO in the related technology is merely 20mm, resulting in a large coupling pressure. According to the embodiments of the present disclosure, the fan-out length of the optical fibers can be increased, which greatly alleviates the pressure of the horizontal coupling method. The additional area of the CPO can be used to meet the space requirement for wave combining and wave splitting of optical paths of FR4 (4-wavelength 1-fiber).
3. The differentiation of the area corresponding DR4 (4-wavelengths 1-fiber) and the area corresponding to FR4 (4-wavelengths 1-fiber) is realized, resulting in lower cost.
   At present, in the fields of Arrayed Waveguide Grating (AWG), Etched Diffraction Grating (EDG), and Multimode Interference (MMI), FR4 (4-wavelength 1-fiber) needs enough space to realize wave combining and wave splitting, which makes the area of the space be a very important part in the technology of the CPO. In the embodiments of the present disclosure, the area of the CPO of the specification of DR4 is made smaller than that of the CPO of the specification of FR4, and the CPOs of the two specifications can be freely combined.
4. If the area of the CPO needs to be increased, the area can be expanded efficiently without changing the distance between the CPO and the chip.

In the related technology adopting the rectangular CPO, for increasing the width of the front end of the CPO, the distance between the CPO and the chip needs to be increased, which may cause the problems of power consumption and signal integrity. If the extension length of the CPO is increased, the problem of signal integrity may be caused. According to the embodiments of the present disclosure, the expansion of the space can be realized efficiently without increasing the width of the front end of the CPO, that is, without increasing the distance between the CPO and the chip.

An embodiment of the present disclosure further provides a network device, including the co-packaged assembly described above. In some embodiments, the network device may be a Data Center (DC) switch or a Direct Digital Control (DDC) router.

The embodiments of the present disclosure propose the solution of the trapezoidal CPOs, and the two CPA architectures, i.e., the CPA architecture with eight CPOs in the shape of right trapezoid configured for one chip (i.e., the 1+8 CPA architecture) and the CPA architecture with four CPOs in the shape of isosceles trapezoid configured for one chip (i.e., the 1+4 CPA architecture). In order to solve the problem of the 1+8 CPA architecture that the two CPOs in the shape of right trapezoid at the same edge of the chip are asymmetric, the embodiments of the present disclosure propose two solutions: one is to add the models of the CPOs, that is, providing two models of the CPOs in the shape of right trapezoid, and the other is to adopt one model of the CPOs in the shape of right trapezoid, with the CPOs disposed on the two sides of the substrate.

The embodiments of the present disclosure are used for realizing optimization of the space between the CPO and the chip, and are applicable to all products and environments using the CPO. At present, the embodiments of the present disclosure are mainly applied to the products such as the DC switch and the DDC router, and are applied to the environments such as high-speed computing and AI learning, and to Compute Express Link (CXL) connection environments of the products.

According to the embodiments of the present disclosure, the trapezoidal CPOs are used to replace the rectangular CPOs, the fan-out space of the optical fibers can be increased, the space utilization efficiency of the CPA can be improved, and moreover, the efficient expansion of the area of the CPO can be realized; the existing solution of configuring sixteen CPOs for one chip is redesigned into the solution of configuring eight or four CPOs for one chip; as for the solution of configuring eight CPOs for one chip, the solution of bonding the CPOs to the chip and the solution of adding the models of the CPOs are proposed, which solves the problem that the CPOs in the shape of right trapezoid are not interchangeable due to the asymmetric shape; and different solutions are proposed for the area of DR4 (4-wavelength 4-fiber) and the area of FR4 (4-wavelength 1-fiber), which solves the existing problem that the cost and the design difficulty of FR4 is hard to be balanced.

It should be understood by those of ordinary skill in the art that the functional modules/units in all or some of the operations and the devices in the method disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, a Random Access Memory (RAM), a Read-Only Memory (ROM), an Electrically Erasable Programmable Read-Only Memory (EEPROM), a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses the exemplary implementations using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular implementation can be used alone or in combination with features, characteristics and/or elements described in connection with other implementations. Therefore, it should be understood by those of ordinary skill in the art that various changes in the forms and the details can be made without departing from the scope of the present disclosure of the appended claims.

## Claims

1. A co-packaged assembly, comprising a substrate, a chip, and a plurality of Co-Packaged Optics, CPOs, the chip being disposed in a central region on a first side of the substrate, and each of the CPOs being disposed in a peripheral region of the substrate; and
orthographic projections of all the CPOs on the substrate completely surrounding an orthographic projection of the chip on the substrate, and the orthographic projections of two adjacent CPOs on the substrate being spliced with each other.

2. The co-packaged assembly of claim 1, wherein the CPOs comprise first CPOs comprising model-I first CPOs and model-II first CPOs, a pair of a model-I first CPO and a model-II first CPO is arranged outside each edge of the chip, and the model-I first CPO and the model-II first CPO are arranged in an axisymmetric manner.

3. The co-packaged assembly of claim 2, wherein each of the first CPOs is disposed on a same side of the substrate, or the model-I first CPOs are disposed on the first side or a second side of the substrate, the second side is an opposite side relative to the first side, and the model-II first CPOs and the model-I first CPOs are disposed on different sides of the substrate.

4. The co-packaged assembly of claim 2, wherein the model-I first CPOs comprise model-I specification-I first CPOs and model-I specification-II first CPOs, the model-II first CPOs comprise model-II specification-I first CPOs and model-II specification-II first CPOs, and an area of a model-I specification-I first CPO and an area of a model-II specification-I first CPO are smaller than an area of a model-I specification-II first CPO and an area of a model-II specification-II first CPO, respectively; and
all the model-I specification-I first CPOs, the model-I specification-II first CPOs, the model-II specification-I first CPOs, and the model-II specification-II first CPOs are disposed on the first side of the substrate.

5. The co-packaged assembly of claim 1, wherein the CPOs comprise first CPOs comprising model-I first CPOs, a part of the model-I first CPOs are disposed on the first side of the substrate, the other part of the model-I first CPOs are disposed on a second side of the substrate, and the second side is an opposite side relative to the first side.

6. The co-packaged assembly of claim 5, wherein the model-I first CPOs comprise model-I specification-I first CPOs and model-I specification-II first CPOs, and an area of a model-I specification-I first CPO is smaller than an area of model-I specification-II first CPO; and
a part of the model-I specification-I first CPOs and the model-I specification-II first CPOs are disposed on the first side of the substrate, and the other part of the model-I specification-I first CPOs and the model-I specification-II first CPOs are disposed on the second side of the substrate.

7. The co-packaged assembly of claim 2 or 5, wherein the CPOs further comprise second CPOs comprising specification-I second CPOs and specification-II second CPOs, an area of a specification-I second CPO is smaller than an area of a specification-II second CPO, and the specification-I second CPOs and the specification-II second CPOs are disposed on the first side of the substrate.

8. The co-packaged assembly of claim 1, wherein the CPOs comprise second CPOs, and each of the second CPOs is disposed on the first side of the substrate.

9. The co-packaged assembly of claim 8, wherein the second CPOs comprise specification-I second CPOs and specification-II second CPOs, and an area of a specification-I second CPO is smaller than an area of a specification-II second CPO.

10. The co-packaged assembly of claim 1, wherein each of the CPOs is disposed on the first side and a second side of the substrate, and the second side is an opposite side relative to the first side.

11. The co-packaged assembly of any one of claims 1 to 6 or 8 to 10, wherein each of the CPOs is in a shape of trapezoid, and two legs of trapezoidal orthographic projections of two adjacent CPOs on the substrate are spliced with each other.

12. The co-packaged assembly of claim 11, wherein the CPOs are the first CPOs of any one of claims 2 to 6 or 10, and the first CPOs are in a shape of right trapezoid.

13. The co-packaged assembly of claim 12, wherein the CPOs are the second CPOs of any one of claims 8 to 10, and the second CPOs are in a shape of isosceles trapezoid.

14. A network device, comprising the co-packaged assembly of any one of claims 1 to 13.
